**Europäisches Patentamt**

**European Patent Office**

**Office européen des brevets**

(11) Veröffentlichungsnummer: **0 037 844**
**A1**

(12) # EUROPÄISCHE PATENTANMELDUNG

(21) Anmeldenummer: 80102035.5

(22) Anmeldetag: 16.04.80

(51) Int. Cl.³: **B 29 D 7/20**, C 21 D 9/56

(43) Veröffentlichungstag der Anmeldung: 21.10.81
Patentblatt 81/42

(84) Benannte Vertragsstaaten: **CH DE LI SE**

(71) Anmelder: **Pagendarm, Erich, Adalbertstrasse 5, D-2000 Hamburg 52 (DE)**

(72) Erfinder: **Pagendarm, Erich, Adalbertstrasse 5, D-2000 Hamburg 52 (DE)**

(74) Vertreter: **Glawe, Richard, Dr. Dipl.-Ing. et al, Glawe, Delfs, Moll & Partner Rothenbaumchaussee 58, D-2000 Hamburg 13 (DE)**

(54) Verfahren und Vorrichtung zum Wärmeaustausch einer Bahn mit einer sie führenden, bewegten Fläche.

(57) Die Erfindung bezieht sich auf ein Verfahren und eine Vorrichtung zum Wärmeaustausch einer Bahn mit einer sie führenden, bewegten Fläche, beispielsweise der Oberfläche einer Kühl- oder Heizwalze (6). Um einen gleichmäßigen Wärmeübergang zu gewährleisten und die Gefahr stellenweiser Lufteinschlüsse und Wellungen zu vermeiden, wird zwischen die Folie (1) und die mit ihr im Wärmeaustausch stehende Einrichtung (6) ein Flüssigkeitsfilm (5) eingebracht.

1

## Beschreibung

Die Erfindung bezieht sich auf ein Verfahren zum Wärmeaustausch einer Bahn mit einer sie führenden, bewegten Fläche. Sie bezieht sich ferner auf eine Vorrichtung zum Heizen oder Kühlen einer Bahn mittels einer die Bahn führenden, bewegten Fläche, insbesondere der Oberfläche einer Walze.

Es ist bekannt, flexible Bahnen dadurch zu heizen oder zu kühlen, daß sie über Walzen geführt werden, deren Oberfläche beheizt oder gekühlt ist. Der Wärmeaustausch findet dabei im wesentlichen durch Wärmeleitung in direktem Kontakt der Bahn mit der Walzenoberfläche statt. Dabei kann es jedoch insbesondere bei hohen Bahngeschwindigkeiten zu partiellen Lufteinschlüssen zwischen der Bahn und der Walzenoberfläche kommen, die den Wärmetransport stellenweise behindern. Die dadurch hervorgerufenen Ungleichmäßigkeiten des Wärmeaustauschs sind für manche Verfahren nicht akzeptabel. Wenn beispielsweise bei Verfahren zum Vernetzen einer Bahnbeschichtung mittels kalter Strahlung diese Strahlung auch wärmende Anteile enthält oder wenn die Beschichtungsmasse exotherm aushärtet, können bei ungleichmäßiger Wärmeabfuhr Temperaturunterschiede in der Folie auftreten, die den Erfolg des Verfahrens in Frage stellen. Bereiche unzureichenden Kontakts der Folie mit der Walzenoberfläche können selbst bei Verwendung plan liegender Folien dadurch entstehen, daß die Folie sich aufgrund der Temperaturerhöhung im Strahlenfeld insbesondere quer zur Laufrichtung dehnt, wobei sich Wellen aufwerfen.

Der Erfindung liegt daher die Aufgabe zugrunde, ein Verfahren bzw. eine Vorrichtung der eingangs genannten Art zu schaffen, das bzw. die gleichmäßigen Wärmeleitkontakt der Folie mit der Wärmeaustauschfläche
gewährleistet.

Das erfindungsgemäße Verfahren ist dadurch gekennzeichnet, daß zwischen der Fläche und der Bahn ein
Flüssigkeitsfilm vorgesehen wird. Die erfindungsgemäße Vorrichtung zeichnet sich dadurch aus, daß eine
Einrichtung zum Auftragen eines Flüssigkeitsfilms auf
die Bahn und/oder die Fläche vorgeschaltet ist.

Der Flüssigkeitsfilm verhindert die Entstehung stellenweiser Luftpolster zwischen der Folie und der Walzenoberfläche und sorgt dadurch für eine gleichmäßige Wärmeleitverbindung. Es hat sich gezeigt, daß bei Anwesenheit eines Flüssigkeitsfilms auf der Walze und/oder
der Folie Luft zwischen Walze und Folie erst bei weit höheren
Bahngeschwindigkeiten eingezogen wird.

Ein weiterer Vorteil der Erfindung liegt darin, daß
der Flüssigkeitsfilm die Reibung zwischen der Folie
und der Walzenoberfläche herabsetzen kann und dadurch
eine Relativverschiebung der Folie auf der Walzenfläche, beispielsweise im Falle einer Wärmedehnung oder Krumpfung
der Folie, ermöglicht.

Schließlich besteht ein Vorteil der Erfindung darin,
daß der Wärmeaustausch durch den Flüssigkeitstransport gefördert wird, weil ein Teil des Wärmetransports
durch die ständig zu- und abgeführte Flüssigkeit übernommen werden kann.

Die Bildung eines gleichmäßigen Flüssigkeitsfilms
wird zweckmäßigerweise durch Wahl einer Wärmeaustauschfläche gefördert, die eine hohe Adhäsivität
zu der verwendeten Flüssigkeit aufweist, nämlich beispielsweise durch geeignete Materialwahl oder
Gestaltung der Oberfläche. Insbesondere hat sich
Mikrorauhigkeit der Oberfläche als vorteilhaft erwiesen.

An der Ablaufstelle der Folie verbleibt ein Teil der
zugeführten Flüssigkeit an der Kühlwalze, ein anderer
Teil wird mit der ablaufenden Folie fortgeführt. Die
an der Folie haftende Flüssigkeit kann über eine mechanische Rakel oder eine Luftdüse abgeschält und vorzugsweise dem Flüssigkeitsantraswerk wieder zugeführt
werden. Die an der Walzenoberfläche haftende Flüssigkeit kann ggf. daran verbleiben oder ebenfalls durch
Rakel entfernt und ausgetauscht werden.

Vorteilhafterweise wird die Wärmeaustauschfläche von
einer Walze gebildet. Jedoch können auch andere Einrichtungen mit einer zum Wärmeaustausch und zur Führung der Bahn geeigneten, bewegten Oberfläche verwendet werden, beispielsweise ein umlaufendes Förderband.

Eine für den Einzelfall geeignete Flüssigkeitsmenge
bzw. Schichtdicke der Flüssigkeit läßt sich durch
Versuch leicht ermitteln. Wenn beispielsweise die
Möglichkeit einer Verschiebung der Folie auf der
Oberfläche erwünscht ist, wird man beispielsweise
eine größere Schichtdicke wählen, als wenn nur
ein gleichmäßiger Wärmeübergang erforderlich ist.
Zu gering soll die Schichtdicke nicht sein, weil
sonst die Gefahr verbleibt, daß doch noch Gas in
den Auflaufspalt zwischen Folie und Walze eingezogen wird. Es kann zur vollständigen Vermeidung
eines Gaseinschlusses sogar ein gewisser Flüssigkeitsvorrat oder -stau im Auflaufspalt zweckmäßig
sein. Bei Verwendung von Wasser hat sich eine Schichtdicke von mindestens etwa 0,01 mm, vorzugsweise mindestens etwa 0,02 mm bewährt.

4

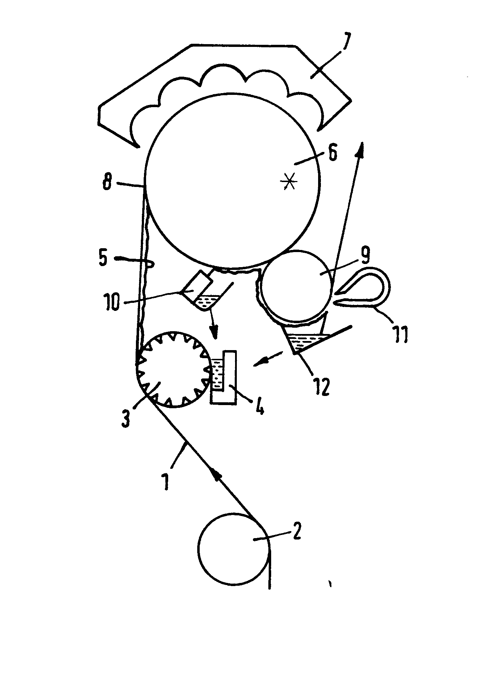

Die Erfindung wird im folgenden näher unter Bezugnahme
auf die Zeichnung erläutert, die in einer Figur eine
schematische Seitenansicht einer erfindungsgemäßen
Vorrichtung veranschaulicht.

Die Folie 1 läuft aus dem durch die Walze 2 angedeuteten Beschichtungswerk in Pfeilrichtung über ein
Wasserantragswerk, das aus einer Wasserantragswalze
3 und einem Wasserantragskasten 4 besteht. Das Wasserantragswerk bildet einen gleichmäßigen Wasserfilm
5 auf der Folie. Anschließend wird die Folie über
eine Kühlwalze 6 geführt, wobei der Wasserfilm 5 eine
gleichmäßige Vermittlungsschicht zwischen der Walzenoberfläche und der Folie 1 bildet. Oberhalb der
Kühlwalze 4 ist eine Strahlungseinrichtung 7 vorgesehen, durch die die auf der ihr zugewandten Seite der
Folie aufgetragene Beschichtung getrocknet oder vernetzt wird, wobei die notwendige Kühlung der Folie
durch die Kühlwalze 6 sicherhestellt ist. Wenn während der Behandlung eine Dehnung der Folie auftritt,
so kann diese auf der Oberfläche der Walze sich dank
der durch den Flüssigkeitsfilm verminderten Reibung
ggf. verschieben, ohne stellenweise den Kontakt mit
der Walzenoberfläche bzw. dem Flüssigkeitsfilm zu
verlieren. Dabei ist Wasser in ausreichender Menge
an der Stelle 8 vorhanden, an der die Folie auf
die Kühlwalze 6 aufläuft, damit keine Luft in den
Spalt hineingezogen wird.

Durch eine Leitwalze 9 wird die Folie 1 von der
Kühlwalze 6 abgenommen, wobei jeweils ein Teil
des Wassers an der Walzen- und Folienoberfläche
verbleibt. Das an der Walze verbleibende Wasser kann
daran belassen werden, um es der Auflaufstelle 8 unmittelbar wieder zuzuführen. Im dargestellten Beispiel ist stattdessen eine Rakeleinrichtung 10 vorgesehen, die diese Flüssigkeit von der Walzenoberfläche abnimmt, um sie dem Antragswerk 3, 4 wieder
zuzuführen. Das an der Folie haftende Wasser wird
durch eine Luftdüse 11 abgenommen, die auch die vom
Wasser befreite Folienoberfläche trocknet. Das
Wasser wird dann über eine Auffangwanne 12 ebenfalls dem Wasserantragswerk 3, 4 wieder zugeführt.
Im Wasserkreislauf kann eine nicht gezeigte Einrichtung zum Kühlen oder Heizen des Wassers vorgesehen
sein.

GLAWE, DELFS, MOLL & PARTNER

PATENTANWÄLTE
ZUGELASSENE VERTRETER BEIM EUROPÄISCHEN PATENTAMT

0037844

RICHARD GLAWE
DR.-ING.

KLAUS DELFS
DIPL-ING

WALTER MOLL
DIPL.-PHYS. DR. RER. NAT.
ÖFF. BEST. DOLMETSCHER

ULRICH MENGDEHL
DIPL.-CHEM. DR. RER. NAT.

HEINRICH NIEBUHR
DIPL.-PHYS. DR. PHIL. HABIL.

8000 MÜNCHEN 26
POSTFACH 37
LIEBHERRSTR. 20
TEL. (089) 22 65 48
TELEX 52 25 05 SPEZ

2000 HAMBURG 13
POSTFACH 25 70
ROTHENBAUM-
CHAUSSEE 58
TEL. (040) 4 10 20 08
TELEX 21 29 21 SPEZ

Erich Pagendarm, Hamburg

-----------------------------------

Verfahren und Vorrichtung zum
Wärmeaustausch einer Bahn mit
einer sie führenden, bewegten
Fläche

-----------------------------------

p 9611/80 EU
D/ad-ab

HAMBURG


Patentansprüche


1. Verfahren zum Wärmeaustausch einer Bahn mit einer
sie führenden, bewegten Fläche, dadurch gekennzeichnet, daß zwischen der Fläche und der Bahn ein Flüssigkeitsfilm vorgesehen wird.


2. Vorrichtung zum Heizen oder Kühlen einer Bahn mittels
einer die Bahn führenden, bewegten Fläche, insbesondere
der Oberfläche einer Walze, nach dem Verfahren gemäß
Anspruch 1, dadurch gekennzeichnet, daß eine Einrichtung (3,4) zum Auftragen eines Flüssigkeitsfilms (5)
auf die Bahn (1) und/oder die Fläche (Walze 6) vorgeschaltet ist.


3. Vorrichtung nach Anspruch 1, dadurch gekennzeichnet,
daß eine Fläche hoher Adhäsion zu der verwendeten Flüssigkeit verwendet wird.


BANK: DRESDNER BANK, HAMBURG, 4 030 448 (BLZ 200 800 00) · POSTSCHECK: HAMBURG 1476 07-200 (BLZ 200 100 20) · TELEGRAMM: SPECHTZIES

# EUROPÄISCHER RECHERCHENBERICHT

**0037844**
Nummer der Anmeldung

EP 80 10 2035.5

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - C - 1 023 579 (IMPERIAL CHEMICAL INDUSTRIES) <br> * Spalte 8 * <br> -- | 1 |
| | DE -B2 - 1 783 088 (HOECHST) <br> * Spalte 1 * <br> -- | 1 |
| | DE - B - 1 504 030 (J.P. BEMBERG) <br> * Spalte 4 * <br> -- | 1 |
| | DE - A - 2 038 718 (E.I. DU PONT DE NEMOURS) <br> * Seite 10 * <br> -- | 1 |
| | DE -A - 2 233 258 (SIEMENS) <br> * Seite 9 * <br> -- | 1 |
| | DE -A - 2 401 960 (MITSUBISHI PLASTICS INDUSTRIES) <br> * Seite 11 * <br> -- | 1 |
| | DE -A1 - 2 730 522 (FUJI PHOTO FILM) <br> * Seite 1 * <br> -- | 1 |
| | GB - A - 1 140 175 (EASTMAN KODAK) <br> * Seite 6 * <br> -- | 1 |
| A | DE - A - 1 404 471 (E.I. DU PONT DE NEMOURS) <br> -- ./.. | |

**KLASSIFIKATION DER ANMELDUNG (Int. Cl.³)**

B 29 D 7/20

C 21 D 9/56

**RECHERCHIERTE SACHGEBIETE (Int. Cl.³)**

B 29 D 7/20

C 21 D 9/56

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 04-02-1981 | SUTOR |

EPA form 1503.1 06.78

Europäisches
Patentamt

**EUROPÄISCHER RECHERCHENBERICHT**

C037844

Nummer der Anmeldung

EP 80 10 2035.5

- Seite 2 -

| | **EINSCHLÄGIGE DOKUMENTE** | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| A | <u>DE - A - 1 629 802</u> (UNILEVER) | | |

RECHERCHIERTE SACHGEBIETE (Int. Cl.³)

EPA Form 1503.2   06.78